# EUROPÄISCHE PATENTSCHRIFT

(11) **EP 3 504 415 B1**
(45) Veröffentlichungstag und Bekanntmachung des Hinweises auf die Patenterteilung: **15.07.2020**
(21) Anmeldenummer: 17755515.8
(22) Anmeldetag: 23.08.2017
(51) Int. Cl.: F02D 19/02, F02D 19/06, F02D 41/00, F02D 41/40, F02D 41/30, F02D 19/10

(54) **GASBETRIEBENE BRENNKRAFTMASCHINE UND VERFAHREN ZU DEREN BETRIEB**
GAS-OPERATED INTERNAL COMBUSTION ENGINE AND METHOD FOR THE OPERATION THEREOF
MOTEUR À COMBUSTION INTERNE À GAZ ET PROCÉDÉ DE FONCTIONNEMENT ASSOCIÉ

(30) Priorität: 29.08.2016 DE 102016116039
(43) Veröffentlichungstag der Anmeldung: 03.07.2019
(73) Patentinhaber: ABB Turbo Systems AG, 5400 Baden (CH)
(72) Erfinder: WEISSER, German, 8047 Zürich (CH); IMHOF, Dino, 5400 Baden (CH)
(74) Vertreter: Zimmermann & Partner Patentanwälte mbB
(86) Internationale Anmeldenummer: PCT/EP2017/071235
(87) Internationale Veröffentlichungsnummer: WO 2018/041694

(56) Entgegenhaltungen:
- WO-A1-2013/022630
- US-A1- 2002 078 918
- US-A1- 2004 118 557
- US-A1- 2016 097 338

## Beschreibung

### Technisches Gebiet

Die vorliegende Offenbarung betrifft ein Verfahren zum Betrieb von Brennkraftmaschinen, dabei insbesondere Verbrennungsmotoren mit Direkteindüsung eines gasförmigen Brennstoffs.

### Hintergrund der Erfindung

Es ist bekannt, Verbrennungsmotoren, insbesondere Gasmotoren, mit äußerer Gemischbildung zu betreiben und das Gas-Luft-Gemisch durch Fremdzündung zu zünden. Auch bekannt sind sogenannte Dual Fuel Verbrennungsmotoren bei denen das Gas-Luft-Gemisch durch eine kleine Menge eines Pilot-Brennstoffs, zum Beispiel Diesel, gezündet wird. Solche Dual Fuel Verbrennungsmotoren können auch im reinen Dieselbetrieb betrieben werden.

Nachteilig an solchen Verbrennungsmotoren ist eine begrenzte Effizienz aufgrund des relativ tiefen Verdichtungsverhältnisses, welches erforderlich ist, um ein unkontrolliertes Verbrennen durch Selbstzündung des Gas-Luft-Gemischs zu vermeiden. Ein weiterer Nachteil solcher Verbrennungsmotoren besteht in der eingeschränkten Dynamik bei Lasterhöhungen.

Auch bekannt sind Verbrennungsmotoren mit direkter Eindüsung eines Gases in den Brennraum, wobei das Gas üblicherweise mit etwa 250 bis 500 bar eingedüst wird. Diese Eindüsung der Gasmenge in den Brennraum beginnt typischerweise etwa zum Ende des Kompressionstaktes nahe dem oberen Totpunkt (OT). Eine kleine Menge eines Pilot-Brennstoffs, zum Beispiel Diesel, oder eine Fremdzündung, zum Beispiel eine Zündkerze, wird eingesetzt, diesen Gasstrahl zu zünden.

Verbrennungsmotoren mit Gas-Direkteindüsung weisen üblicherweise einen hohen thermischen Wirkungsgrad auf, der aus dem hohen Verdichtungsverhältnis resultiert. Dieses führt auch zu einem fast identischen Wirkungsgrad im reinen Dieselbetrieb. Bei dynamischen Vorgängen, im Zweistoff-Betrieb und bei reinem Dieselbetrieb ist das Verhalten vergleichbar zu dem reiner Dieselmotoren mit Direkteinspritzung.

Zu den Nachteilen der Gas-Direkteindüsung gehören hohe NOₓ-Emissionen, da das eingebrachte Gas vor allem in einer mischungskontrollierten Verbrennung umgesetzt wird. Als nachteilig kann ferner der signifikante Energieaufwand angesehen werden, der zur Kompression des Gases auf den Eindüsungs-Druck aufgebracht werden muss. Wegen der prinzipbedingt hohen NOₓ-Emissionswerte werden Motoren mit Gas-Direkteindüsung und dieseltypischem Verdichtungsniveau daher häufig - je nach Emissionsgesetzgebung oder Umweltrichtlinien der Zielmärkte - mit Maßnahmen zur Minderung dieser Problematik ausgestattet, etwa einer Abgasrückführung oder selektiver katalytischer Reduktion (SCR).

CA 2838120 A1 offenbart einen direkteinspritzenden, gasbetriebenen Motor, der mittels Selbstzündung eines Pilot-Brennstoffs gezündet wird.

US 2002/078918 A1 offenbart einen anderen direkteinspritzenden, gasbetriebenen Motor.

Vor dem Hintergrund des Standes der Technik besteht Bedarf nach Verbrennungsmotoren mit Gas-Direkteindüsung und Verfahren zu deren Betrieb, die verbesserte Eigenschaften, insbesondere eine verbesserte Emissions-Charakteristik aufweisen.

### Zusammenfassung der Erfindung

Die Aufgabe der Erfindung wird gelöst durch ein Verfahren gemäß Anspruch 1 und einen Verbrennungsmotor gemäß Anspruch 11.

In einem ersten Aspekt der Erfindung wird ein Verfahren zur stickoxid-armen Verbrennung eines gasförmigen Brennstoffs im Brennraum eines Verbrennungsmotors mit innerer Gemischbildung bereitgestellt. Das Verfahren umfasst das Eindüsen einer ersten Gasmenge während des Ansaugvorgangs; die Kompression des Gas-Luft-Gemischs; das Eindüsen einer zweiten Gasmenge beginnend während oder zum Ende der Kompression, wobei die erste und die zweite Gasmenge so gewählt werden, dass ein vorgegebener Wert der NOₓ-Emission nicht überschritten wird; das Zünden des Gas-Luft-Gemisches; und das Verbrennen der Gesamt-Gasmenge aus erster Gasmenge und zweiter Gasmenge, wobei die erste Gasmenge vorgemischt verbrannt wird, und die zweite Gasmenge vorwiegend in einer mischungskontrollierten Verbrennung umgesetzt wird. Zudem wird ein entsprechender Verbrennungsmotor vorgeschlagen.

Ein Vorteil des Verfahrens besteht darin, dass das hybride Verbrennungskonzept - mit einer Kombination aus vorgemischter Verbrennung und mischungskontrollierter Verbrennung - einen Betrieb mit einem hohen Anteil an vorgemischter Verbrennung ermöglicht. Dies ermöglicht die Erzielung niedriger NOₓ-Emissionen durch einen geringen Anteil an mischungskontrollierter Verbrennung des eingedüsten Gasstroms, sowie eine erhöhte Kontrolle über den Verbrennungsprozess.

Weitere Merkmale und Vorteile der vorliegenden Erfindung werden in der folgenden ausführlichen Beschreibung von bevorzugten Ausführungsformen des Systems vorgestellt.

### Kurze Beschreibung der Figuren

Weitere Merkmale und Vorteile der vorliegenden Erfindung werden für den Fachmann anhand der ausführlichen Beschreibung in Verbindung mit den angehängten Figuren ersichtlich. Dabei zeigen:
Fig. 1 zeigt ein Eindüsungsschema gemäß einem Verfahren nach Ausführungsformen der Erfindung;
Fig. 2 zeigt einen Verbrennungsmotor zum Ausführen eines Verfahrens gemäß Ausführungsformen.

### Detaillierte Beschreibung

Auch wenn bevorzugte Ausführungsformen beschrieben werden, ist der Schutzbereich der Erfindung nicht auf dargestellten Ausführungsformen beschränkt, sondern umfasst auch für den Fachmann naheliegende Ausführungsformen im Rahmen der beigefügten Ansprüche.

So wie er in dieser Offenbarung verwendet wird, bedeutet der Ausdruck: "ein vorgegebener Wert der NOₓ-Emission nicht überschritten wird", dass dieser Wert verschiedene Bezugsrahmen haben kann. Der Wert kann sich etwa auf die aufsummierte Emission aus einem definierten Fahrzyklus beziehen, oder auf die gemittelte Emission aus einer definierten Zeitspanne, oder im Mittel per abgegebener Energiemenge (z.B. 3,5 g/kWh) oder auch einen Wert in Echtzeit oder eine Massenkonzentration (z.B. 1 g/Nm3) darstellen.

Grundsätzlich betreffen Ausführungsformen der Erfindung ein Verfahren zum Betrieb von Verbrennungsmotoren mit Gas-Direkteindüsung, wobei ein hybrides Verbrennungsverfahren zur Anwendung kommt. Gemäß der hierin verwendeten Bedeutung bezieht sich "hybrides Verbrennungsverfahren" darauf, dass ein Teil des Brennstoffs in einer vorgemischten Verbrennung und ein Teil in einer mischungskontrollierten Verbrennung umgesetzt wird.

Grundsätzlich wird dazu, gemäß Ausführungsbeispielen der Erfindung, die Gas-Eindüsung in den Zylinder in mindestens zwei zeitlich voneinander getrennte bzw. beabstandete Vorgänge aufgeteilt. Die erste Gaseindüsung geschieht während des Einlass-Taktes, wodurch eine nahezu homogene Durchmischung dieser ersten Gasmenge mit Luft ermöglicht wird. Nahe dem oberen Totpunkt wird dann typischerweise ein flüssiger Pilot-Brennstoff eingespritzt, gefolgt von der Eindüsung einer zweiten Gasmenge. Die erste Gasmenge verbrennt in einer vorgemischten Verbrennung des gebildeten weitgehend bzw. idealerweise homogenen Gas-Luft-Gemischs. Die zweite Gasmenge wird dagegen in einer mischungskontrollierten Verbrennung umgesetzt. Da eine mischungskontrollierte Verbrennung grundsätzlich mit signifikant höheren NOₓ-Emissionen als eine vorgemischte Verbrennung bei den hier zur Anwendung kommenden Luftzahlen verbunden ist, ist der Stickoxid-Ausstoß des Motors deutlich reduziert im Vergleich zum reinen Direkteindüsungs-Betrieb, dies umso stärker, je größer die vorgemischt verbrennende erste Gasmenge im Verhältnis zur zweiten Gasmenge gewählt bzw. eingestellt wird.

In einigen Ausführungsbeispielen, die im Folgenden noch genauer ausgeführt werden, können zumindest kurzfristig die jeweiligen Eindüs- oder Einspritzmengen der ersten und zweiten Gasmenge sowie des Pilot-Brennstoffs individuell reduziert werden, in einigen Fällen auch bis auf null reduziert werden. Auch können generell die Vorgänge des Eindüsens der ersten Gasmenge und/oder der zweiten Gasmenge jeweils weiter unterteilt, das heißt in mehreren Einzelphasen aufgeteilt vorgenommen werden.

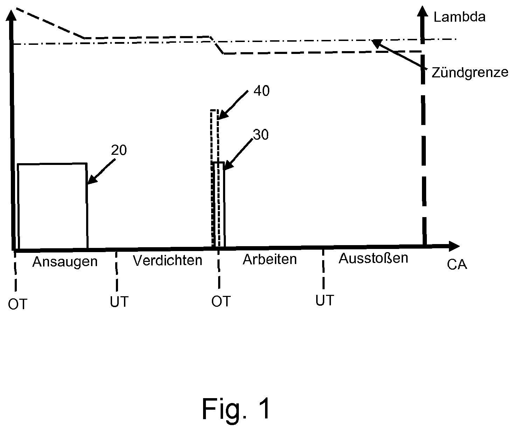

Fig. 1 zeigt schematisch den zeitlichen Ablauf eines Verfahrens gemäß Ausführungsbeispielen der Erfindung. Gezeigt ist das Eindüsen einer ersten Gasmenge 20 während des Ansaugvorgangs, wobei die Luftzahl des dabei gebildeten Gas-Luft-Gemischs im mageren Bereich oberhalb oder weit oberhalb der Zündgrenze liegt. In der folgenden Kompression wird das Gas-Luft-Gemisch komprimiert. Gegen Ende der Kompression, d.h. nahe des oberen Totpunkts (OT), wird eine zweite Gasmenge 30 eingedüst. Das so entstandene Gas-Luft-Gemisch wird gezündet, vorzugsweise durch Einspritzung eines Pilot-Brennstoffs 40 bereits zu Beginn der Eindüsung der zweiten Gasmenge 30. Das komprimierte Gas-Luft-Gemisch wird verbrannt, wobei die erste Gasmenge 20 vorgemischt verbrannt wird, und die zweite Gasmenge vorwiegend in einer mischungskontrollierten Verbrennung umgesetzt wird Die erste und die zweite Gasmenge dabei werden gemäß Ausführungsbeispielen so gewählt, dass ein vorgegebener Wert der NOₓ-Emission nicht überschritten wird. Dies betrifft sowohl das Verhältnis der beiden Gasmengen zueinander als auch deren absolute Werte.

In Ausführungsbeispielen ist daher das Kennfeld des Einspritzsystems 100 typischerweise so ausgelegt, dass für zumindest einen Teil der Lastfälle und Drehzahlen die erste und zweite Einspritzmenge so dosiert sind, dass ein NOₓ-Zielwert eingehalten wird. Die Kennfeldfestlegung geschieht typischerweise während der Entwicklung anhand von Testmessungen der NOₓ -Emission. Dabei kann der jeweilige Emissionswert in Echtzeit Basis für die Zumessung der Eindüsmengen sein. In anderen Beispielen kann ein vorgegebener Testzyklus Maßgabe sein, in dessen zeitlichem Mittel (bzw. in Summe) ein bestimmtes NOₓ -Niveau eingehalten werden soll. So kann ein relativ höherer Emissionswert in bestimmten Lastfällen durch eine deutlich unter dem Zielwert liegende Emission in anderen Lastfällen kompensiert oder überkompensiert werden. Durch das weiter oben beschriebene, generell niedrige Niveau der NOₓ - Emission, das durch die hier beschriebenen Ausführungsformen möglich ist, lässt sich auf diese Weise ein NOₓ -armer Betrieb realisieren, ohne dass dazu weitere konstruktive Maßnahmen zur NOₓ-Reduzierung wie etwa Abgasrückführung oder Selektive katalytische Reduktion erforderlich wären. Das niedrige Emissionsniveau wird auch durch das für einen selbstzündenden Verbrennungsmotor eher im unteren Bereich liegende Verdichtungsverhältnis von typischerweise etwa 9:1 bis etwa 14:1 erzielt. Grundsätzlich wirkt das offenbarte Konzept jedoch auch mit höheren Verdichtungen emissions-minimierend, entsprechend höher verdichtete Motoren werden somit ebenfalls als unter die vorliegende Offenbarung fallend angesehen.

Zur Lastregelung werden die erste Gasmenge 20 und die zweite Gasmenge 30 als Funktion der Last variiert. Dies betrifft die absoluten Mengen und insbesondere auch das Verhältnis der beiden Gasmengen zueinander. So kann etwa der prozentuale Anteil der zweiten Gasmenge (an der Gesamt-Gasmenge pro Zyklus) zu niedrigeren Lasten hin reduziert werden. Diese Reduzierung im Fall von Teillast bzw. niedriger Last kann soweit vorgenommen werden, dass die zweite Gasmenge 30 ganz wegfällt, also auf null reduziert wird. Die Zündung geschieht auch in diesem Fall typischerweise durch Einspritzung des Pilot-Brennstoffs 40, wie in Fig. 1 dargestellt, nahe des oberen Totpunkts. Da die gesamte umzusetzende Gasmenge dann nur aus der ersten eingedüsten Gasmenge 20 besteht, verbrennt das gesamte eingedüste Gas in vorgemischter Verbrennung, das heißt unter geringen Stickoxid-Bildung. Lediglich der Pilot-Brennstoff 40 verbrennt in diesem Fall in einer mischungskontrollierten Verbrennung.

Im Fall von dynamischen Lasterhöhungen wird die zweite Gasmenge 30 erhöht und die erste Gasmenge 20 reduziert. Die erste Gasmenge kann dabei optional auch kurzfristig bis auf null abgesenkt werden. Da die zweite Gasmenge durch die mischungskontrollierte Verbrennung typischerweise unter geringeren Gesamt-Kohlenwasserstoff (total hydrocarbon - THC)-Emissionen als die vorgemischte Verbrennung der ersten Gasmenge 20 verbrennt, lässt sich auf diese Weise die THC-Emission bei Lastwechseln minimieren. Ebenso kann bei dynamischen Lastabsenkungen kurzfristig vor allem die erste Gasmenge 20 reduziert werden. Diese Reduzierung kann optional bis auf null erfolgen, so dass nur noch die zweite Gasmenge 30 zur Verbrennung beiträgt. Somit wird bei Lastwechseln die Steuerung der ersten Gasmenge 20 und/oder der zweiten Gasmenge 30 unter der Randbedingung erfolgen, einen vorgegebenen Wert der THC-Emission nicht zu überschreiten.

In Ausführungsbeispielen kann ein Regelorgan vorgesehen sein, über das die in den Zylinder gelangende Luftmenge beeinflusst werden kann. Das Regelorgan befindet sich entweder direkt im Luftpfad oder beeinflusst ihn. Es kann auf unterschiedliche Weise realisiert sein, etwa als Drosselklappe, Drosselventil, als variabler Ventiltrieb (VVT), als Waste Gate, oder als Variable-Turbinengeometrie-Lader (VTG). Die unabhängige Regelung der Luftmenge dient der dynamischen Leistungsanpassung, insbesondere bei gleichzeitiger Erhöhung der ersten Gasmenge 20.

Der in Bezug auf Fig. 1 erwähnte Pilot-Brennstoff 40 wird typischerweise zu Beginn des Eindüsens der zweiten Gasmenge 30 eingespritzt. Das Zünden des Gas-Luft-Gemisches geschieht dann als Folge des Selbstzündens des Pilot-Brennstoffs 40. Der Pilot-Brennstoff ist üblicherweise Diesel, kann aber auch andere flüssige Brennstoffe wie Biodiesel, Rapsöl, etc. umfassen.

Wird, wie oben mit Bezug auf Teillast bzw. niedrige Lasten angeführt, bei niedrigen Lasten die zweite Gasmenge 30 weitgehend oder ganz bis auf null reduziert, so kann der Pilot-Brennstoff 40 bereits früher, nämlich noch früh während der Kompression eingespritzt werden. Bevorzugt geschieht dies zu einem Zeitpunkt entsprechend etwa 50 Grad vor OT bis etwa 90 Grad vor OT.

In einigen Ausführungsbeispielen kann die Zündung des Gas-Luft-Gemisches statt durch den Pilot-Brennstoff 40 auch durch Anwenden einer Fremdzündung geschehen, insbesondere durch eine Zündkerze.

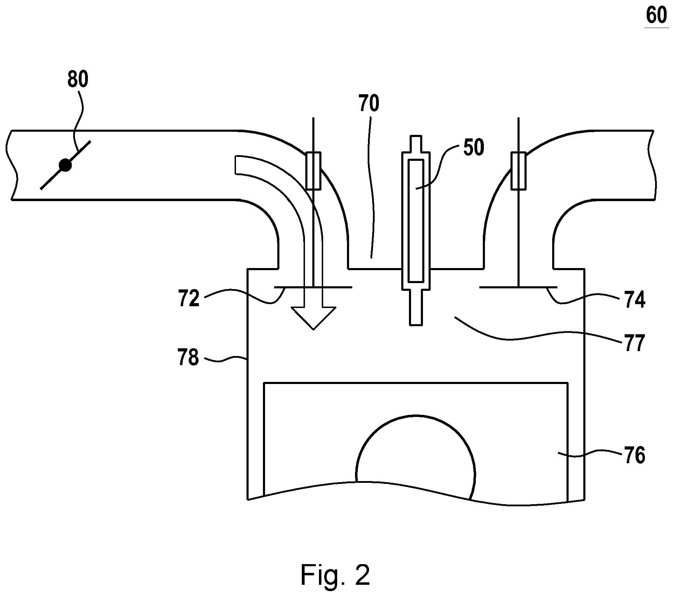

In Fig. 2 ist schematisch ein Verbrennungsmotor 60 dargestellt, der zur Ausführung eines Verfahrens gemäß Ausführungsbeispielen geeignet ist. Dieser weist typischerweise ein Verdichtungsverhältnis zwischen etwa 9:1 und etwa 14:1 auf. Er kann als Saugmotor oder als aufgeladener Motor betrieben werden, insbesondere mit einem Abgas-Turbolader (nicht gezeigt). Neben den Bestandteilen eines Viertaktmotors, nämlich Zylinder 78, Kolben 76, Einlassventil 72, Auslassventil 74, Brennraum 77 weist der Motor gemäß Ausführungsbeispielen einen Injektor 50 auf. Dieser dient zur Eindüsung der ersten Gasmenge 20 bzw. der zweiten Gasmenge 30, sowie des Pilot-Brennstoffs 40 in den Zylinder 78 bzw. den Brennraum 77. Der Injektor 50 kann auf verschiedene Weise ausgeführt sein. Wie dargestellt, können die Zuführungen für Gas und Pilot-Brennstoff in einem einzelnen Injektorgehäuse vorgesehen sein. Ein solcher Injektor wird beispielsweise in der DE102014014452 (B4) offenbart. Möglich sind auch baulich getrennte Ausführungen, wobei die Injektoren für Gas und Pilot-Brennstoff, typischerweise Diesel, jeweils als eigene Einspritz- bzw. Eindüsvorrichtungen im Zylinderkopf 70 bereitgestellt sind, sowie Ausführungen bei denen mehrere Injektoren für Gas zur Anwendung kommen. Grundsätzlich liegen in den meisten hier beschriebenen Ausführungsformen zwischen dem Ende des Eindüsens der ersten Gasmenge und dem Beginn des Eindüsens der zweiten Gasmenge ein Abstand von mindestens etwa 150 Grad Kurbelwinkel. Das bereits oben beschriebene Regelorgan 80 ist in Fig. 2 als nicht-limitierendes Beispiel als Drosselklappe ausgeführt. Das Regelorgan 80 kann generell in Ausführungsbeispielen auf unterschiedliche Art und Weise realisiert sein, zum Beispiel als Drosselventil, als variabler Ventiltrieb (VVT), als Waste Gate, oder als Variable-Turbinengeometrie-Lader (VTG).

Die Vorteile der beschriebenen Ausführungsformen liegen vor allem in erheblich reduzierten NOₓ-Emissionswerten im Vergleich zu herkömmlichen direkt-eindüsenden gasbetriebenen Motoren. Im Vergleich zu herkömmlichen, im Magerbetrieb betriebenen Gasmotoren lassen sich mit einem derartigen "hybriden Verbrennungsverfahren" niedrige Stickoxidemissionen bei höheren thermischen Wirkungsgraden realisieren, ohne Abgasnachbehandlung. Zudem sind die THC-Emissionen geringer.

Generell gilt, dass eine Aufteilung der Gasmenge in eine erste und eine zweite Gasmenge gemäß Ausführungsbeispielen typischerweise sowohl im stationären als auch im transienten Betrieb die Emissionen beeinflussen kann. Beispielsweise führt ein Erhöhen der zweiten Gasmenge typischerweise zu einem Anstieg der NOx-Emissionen und gleichzeitig zu sinkenden THC-Emissionen. Somit erlaubt die Aufteilung in eine erste und eine zweite Gasmenge gemäß Ausführungsbeispielen, im stationären und/oder auch im transienten Betrieb auf vorgegebene Werte der NOx-Emissionen und der THC-Emissionen zu regeln.

Somit kann die Eindüsung der ersten und zweiten Gasmenge gemäß Ausführungsbeispielen so ausgelegt sein, dass vorgegebene Werte der NOx-Emissionen und/oder der THC-Emissionen jederzeit, das heißt als Echtzeit-Werte, oder auch zeitlich gemittelt eingehalten werden, etwa in einem vorgegebenen Test-Motorzyklus oder im Mittel einer kontinuierlichen Messung über einen vorgegebenen Zeitraum (von beispielsweise 30 Minuten)..

Insbesondere kann durch unterschiedliche Aufteilung der Gasmenge in eine erste Gasmenge und eine zweite Gasmenge im transienten Betrieb gegenüber dem stationären Betrieb auch auf unterschiedliche, definierte Werte der NOx-Emissionen und der THC-Emissionen eingestellt werden. Beispielsweise kann bei dynamischen Lasterhöhungen ein höherer Wert für NOx-Emissionen und ein tieferer Wert für THC-Emissionen vorgegeben werden als im stationären Betrieb. Dies wird erreicht durch ein anteiliges Erhöhen der zweiten Gasmenge bei gleichzeitiger anteiliger Reduktion der ersten Gasmenge. Gleichzeitig erlaubt dieses anteilige Erhöhen der zweiten Gasmenge bei anteiliger Reduktion der ersten Gasmenge eine bessere Dynamik bei Lasterhöhungen und Lastabsenkungen. Durch eine Verschiebung des Verhältnisses der ersten Gasmenge und der zweiten Gasmenge kann also das Verhältnis der NOx-Emission und der THC-Emission im transienten Betrieb kurzfristig verschoben werden, bei Erhöhung der zweiten Gasmenge hin zu höheren NOx-Emissionen und geringeren THC-Emissionen, alternativ umgekehrt bei einer anteiligen Verringerung der zweiten Gasmenge hin zu niedrigeren NOx-Emissionen und höheren THC-Emissionen.

Folglich erfolgt die Aufteilung der Gasmenge in eine erste Gasmenge und eine zweite Gasmenge entsprechend der dynamischen Anforderung bei Lastwechsel unter Einhaltung der vorgegebenen Werte der NOx-Emissionen und der THC-Emissionen, entweder kurzfristig in Echtzeit oder im Mittel eines Test-Motorzyklus oder im Mittel einer kontinuierlichen Messung über einen vorgegebenen Zeitraum (von beispielsweise 30 Minuten).

Durch das geringere erforderliche Druckniveau beim Eindüsen der ersten Gasmenge während des Ansaugens, bzw. den deutlich geringeren Massenanteil der zweiten Gasmenge, ergibt sich eine signifikante Energieeinsparung im Vergleich zu direkteindüsenden gasbetriebenen Motoren, die zur Steigerung des Gesamtwirkungsgrades beiträgt.

## Patentansprüche

1. Verfahren zur stickoxid-armen Verbrennung eines gasförmigen Brennstoffs im Brennraum eines Verbrennungsmotors (60) mit innerer Gemischbildung, umfassend:
- Eindüsen einer ersten Gasmenge (20) während des Ansaugvorgangs;
- Kompression des Gas-Luft-Gemischs;
- Eindüsen einer zweiten Gasmenge (30) beginnend während oder zum Ende der Kompression, wobei die erste Gasmenge (20) und die zweite Gasmenge (30) so gewählt werden, dass ein vorgegebener Wert der NOₓ-Emission nicht überschritten wird;
- Zünden des Gas-Luft-Gemisches,
- Verbrennen der Gesamt-Gasmenge aus erster Gasmenge (20) und zweiter Gasmenge (30), wobei die erste Gasmenge vorgemischt verbrannt wird, und die zweite Gasmenge vorwiegend in einer mischungskontrollierten Verbrennung umgesetzt wird, wobei
bei dynamischen Lasterhöhungen die zweite Gasmenge (30) erhöht wird und die erste Gasmenge (20) reduziert wird, und bei dynamischen Lastabsenkungen vor allem die erste Gasmenge (20) reduziert wird, und wobei
bei dynamischen Lasterhöhungen oder Lastabsenkungen eine Änderung der ersten Gasmenge (20) und/oder der zweiten Gasmenge (30) unter der Randbedingung erfolgt, einen vorgegebenen Wert der THC-Emission nicht zu überschreiten.

2. Verfahren nach Anspruch 1, wobei bei dynamischen Lasterhöhungen die zweite Gasmenge (30) erhöht wird und die erste Gasmenge (20) reduziert wird, bis auf null, und bei dynamischen Lastabsenkungen vor allem die erste Gasmenge (20) reduziert wird, bis auf null.

3. Verfahren nach Anspruch 1 oder 2, wobei bei dynamischen Lasterhöhungen durch anteiliges Erhöhen der zweiten Gasmenge bei gleichzeitiger anteiliger Reduktion der ersten Gasmenge ein höherer Wert für NOx-Emissionen und ein niedrigerer Wert für THC-Emissionen eingeahlten wird als im stationären Betrieb.

4. Verfahren nach einem der vorhergehenden Ansprüche, wobei ein Regelorgan (80) im Luftpfad vorgesehen ist, das die Luftmenge beeinflusst.

5. Verfahren nach einem der vorhergehenden Ansprüche, wobei das Eindüsen der ersten Gasmenge (20) und/oder der zweiten Gasmenge (30) in mindestens zwei Einzelphasen aufgetrennt ist.

6. Verfahren nach einem der vorhergehenden Ansprüche, wobei zu Beginn des Eindüsens der zweiten Gasmenge (30) ein Pilot-Brennstoff (40) eingespritzt wird, und wobei das Zünden des Gas-Luft-Gemisches durch Selbstzünden des Pilot-Brennstoffs (40) geschieht.

7. Verfahren nach einem der Ansprüche 1 bis 5, wobei das Zünden des Gas-Luft-Gemischs durch Fremdzündung geschieht.

8. Verfahren gemäß einem der vorhergehenden Ansprüche, wobei zwischen dem Ende des Eindüsens der ersten Gasmenge (20) und dem Beginn des Eindüsens der zweiten Gasmenge (30) ein Abstand von mindestens etwa 150 Grad Kurbelwinkel besteht.

9. Verfahren nach einem der vorhergehenden Ansprüche, wobei der Verbrennungsmotor (60) ein Verdichtungsverhältnis zwischen etwa 9:1 und etwa 14:1 aufweist.

10. Verfahren nach einem der Ansprüche 1 bis 6 oder 9, wobei bei niedrigen Lasten die zweite Gasmenge (30) bis auf null reduziert wird und der Pilot-Brennstoff (40) bereits früh während der Kompression eingespritzt wird, bevorzugt zu einem Zeitpunkt entsprechend 50 Grad vor OT bis 90 Grad vor OT.

11. Ein Verbrennungsmotor (60), der eine Steuereinheit zur Anwendung eines Verfahrens gemäß einem der Ansprüche 1 bis 10 aufweist und zur Durchführung dieses Verfahrens ausgelegt ist.

## Claims

1. A method for low-nitrogen-oxide combustion of a gaseous fuel in the combustion chamber of a combustion engine (60) with internal mixture formation, comprising:
- injecting of a first gas quantity (20) during the suction process;
- compression of the gas-air mixture;
- injecting a second gas quantity (30) starting during or at the end of compression, wherein the first gas quantity (20) and the second gas quantity (30) are selected such that a predetermined value of NOx emission is not exceeded;
- igniting of the gas-air mixture,
- combusting of the total gas quantity from the first gas quantity (20) and second gas quantity (30), wherein the first gas quantity is combusted premixed, and the second gas quantity is predominantly converted in a mixture-controlled combustion, wherein
in the case of dynamic load increases, the second gas quantity (30) is increased and the first gas quantity (20) is reduced, and in the case of dynamic load decreases, above all the first gas quantity (20) is reduced, and wherein
in the case of dynamic load increases or load decreases, a change in the first gas quantity (20) and/or the second gas quantity (30) occurs under the boundary condition of not exceeding a predetermined value of THC emission.

2. The method according to claim 1, wherein, in the case of dynamic load increases, the second gas quantity (30) is increased and the first gas quantity (20) is reduced to zero, and in particular the first gas quantity (20) is reduced to zero in the case of dynamic load decreases.

3. The method according to claim 1 or 2, whereby in the case of dynamic load increases by proportionately increasing the second gas quantity with simultaneous proportionate reduction of the first gas quantity, a higher value for NOx emissions and a lower value for THC emissions is maintained than in stationary operation.

4. The method according to any one of the preceding claims, wherein a control element (80) is provided in the air path which influences the air flow rate.

5. The method according to any one of the preceding claims, wherein the injecting of the first gas quantity (20) and/or the second gas quantity (30) is separated into at least two individual phases.

6. The method according to any one of the preceding claims, wherein a pilot fuel (40) is injected at the beginning of the injection of the second gas quantity (30), and wherein the igniting of the gas-air mixture is effected by self-ignition of the pilot fuel (40).

7. The method according to any one of claims 1 to 5, wherein the ignition of the gas-air mixture is effected by external ignition.

8. The method according to any one of the preceding claims, wherein there is a distance of at least about 150 degrees crank angle between the end of injecting of the first gas quantity (20) and the beginning of injecting of the second gas quantity (30).

9. The method according to any one of the preceding claims, wherein the combustion engine (60) has a compression ratio between about 9:1 and about 14:1.

10. The method according to any one of claims 1 to 6 or 9, wherein for low loads the second gas quantity (30) is reduced to zero and the pilot fuel (40) is already injected early during compression, preferably at a time corresponding to 50 degrees before top dead center to 90 degrees before top dead center.

11. A combustion engine (60) comprising a control unit for use of a method according to any one of claims 1 to 10 and is configured to perform this method.

## Revendications

1. Procédé de combustion à faible taux d'émission d'oxyde d'azote d'un combustible gazeux dans la chambre de combustion d'un moteur à combustion interne (60) à formation de mélange interne, comprenant les étapes consistant à :
- injecter une première quantité de gaz (20) pendant l'opération d'aspiration ;
- comprimer le mélange gaz/air ;
- injecter une deuxième quantité de gaz (30) au début, pendant ou à la fin de la compression, la première quantité de gaz (20) et la deuxième quantité de gaz (30) étant sélectionnées de façon à ne pas dépasser une valeur prédéfinie d'émission de NOₓ ;
- allumer le mélange gaz/air,
- brûler la quantité de gaz totale composée de la première quantité de gaz (20) et de la deuxième quantité de gaz (30), la première quantité de gaz étant brûlée de manière pré-mélangée, et la deuxième quantité de gaz étant mise en réaction principalement suivant une combustion à mélange contrôlé, dans lequel
en cas d'augmentations de charge dynamiques, la deuxième quantité de gaz (30) est augmentée et la première quantité de gaz (20) est réduite, et en cas de baisses de charge dynamiques, principalement la première quantité de gaz (20) est réduite, et dans lequel
en cas d'augmentations de charge ou de baisses de charge dynamiques, une modification de la première quantité de gaz (20) et/ou de la deuxième quantité de gaz (30) est effectuée sous la condition secondaire de ne pas dépasser une valeur prédéfinie de l'émission de HCT.

2. Procédé selon la revendication 1, dans lequel, en cas d'augmentations de charge dynamiques, la deuxième quantité de gaz (30) est augmentée et la première quantité de gaz (20) est réduite jusqu'à zéro, et en cas de baisses de charge dynamiques, principalement la première quantité de gaz (20) est réduite, jusqu'à zéro.

3. Procédé selon la revendication 1 ou 2, dans lequel en cas d'augmentations de charge dynamiques, une augmentation proportionnelle de la deuxième quantité de gaz avec une réduction proportionnelle simultanée de la première quantité de gaz permet d'injecter une valeur supérieure pour les émissions de NOₓ et une valeur inférieure pour les émissions de HCT qu'en fonctionnement stationnaire.

4. Procédé selon l'une quelconque des revendications précédentes, dans lequel un organe de régulation (80) est prévu sur le trajet d'air et influence la quantité d'air.

5. Procédé selon l'une quelconque des revendications précédentes, dans lequel l'injection de la première quantité de gaz (20) et/ou de la deuxième quantité de gaz (30) est séparée en au moins deux phases individuelles.

6. Procédé selon l'une quelconque des revendications précédentes, dans lequel, au début de l'injection de la deuxième quantité de gaz (30), un combustible pilote (40) est injecté, et dans lequel l'allumage du mélange gaz/air est effectué par autoallumage du combustible pilote (40).

7. Procédé selon l'une quelconque des revendications 1 à 5, dans lequel l'allumage du mélange gaz/air est effectué par allumage commandé.

8. Procédé selon l'une quelconque des revendications précédentes, dans lequel entre la fin de l'injection de la première quantité de gaz (20) et le début de l'injection de la deuxième quantité de gaz (30), il existe un intervalle d'au moins environ 150 degrés d'un angle de vilebrequin.

9. Procédé selon l'une quelconque des revendications précédentes, dans lequel le moteur à combustion interne (60) présente un rapport volumétrique compris entre environ 9:1 et environ 14:1.

10. Procédé selon l'une quelconque des revendications précédentes 1 à 6 ou 9, dans lequel en cas de faibles charges, la deuxième quantité de gaz (30) est réduite jusqu'à zéro et le combustible pilote (40) est injecté très tôt pendant la compression, de préférence à un instant qui correspond à 50 degrés avant PMH à 90 degrés avant PMH.

11. Moteur à combustion interne (60) présentant une unité de commande pour appliquer un procédé selon l'une quelconque des revendications 1 à 10 et conçu pour exécuter ce procédé.
